# EUROPÄISCHE PATENTANMELDUNG

(11) **EP 3 176 659 A1**
(43) Veröffentlichungstag der Anmeldung: **07.06.2017**
(21) Anmeldenummer: 15197611.5
(22) Anmeldetag: 02.12.2015
(51) Int. Cl.: G05B 19/4069, G05B 19/18

(54) **VERFAHREN UND VORRICHTUNG ZUM BESTIMMEN VON OBERFLÄCHENDATEN EINES VIRTUELLEN WERKSTÜCKS**

(71) Anmelder: Siemens Aktiengesellschaft, 80333 München (DE)
(72) Erfinder: Friedrich, Ralf, 91074 Herzogenaurach (DE); Köpken, Hans-Georg, 91056 Erlangen (DE); Reichel, Theo, 91301 Forchheim (DE); Schäfers, Elmar, 90763 Fürth (DE)

(57) **Zusammenfassung**

Die Simulation der Bearbeitung eines Werkstücks auf einer Werkzeugmaschine soll verbessert werden, um frühzeitig qualitativ hochwertige Aussagen bezüglich der zu erwartenden Oberflächenqualität des Werkstücks treffen zu können. Hierzu wird vorgeschlagen, ein Modell einer realen Werkzeugmaschine, die zur Fertigung eines zu dem virtuellen Werkstück korrespondierenden realen Werkstücks geeignet ist, zu erzeugen, Fertigungsdaten zur Steuerung der Bewegung wenigstens eines virtuellen Werkzeuges des Modells der Werkzeugmaschine zur Fertigung des virtuellen Werkstücks bereitzustellen und Modellparameter des Modells der Werkzeugmaschine anhand von messtechnisch ermittelten mechatronischen Eigenschaften der realen Werkzeugmaschine zu bestimmen sowie Oberflächendaten des virtuellen Werkstücks anhand der Fertigungsdaten und des Modells der Werkzeugmaschine zu ermitteln.

Die Erfindung bietet den Vorteil, dass eine mangelnde Oberflächenqualität eines Werkstücks bereits erkannt wird, bevor das Werkstück produziert wird, und entsprechende Gegenmaßnahmen eingeleitet werden können.

## Beschreibung

Die Erfindung betrifft ein Verfahren zum Bestimmen von Oberflächendaten eines virtuellen Werkstücks durch Erzeugen eines Modells einer realen Werkzeugmaschine, die zur Fertigung eines zu dem virtuellen Werkstück korrespondierenden realen Werkstücks geeignet ist, durch Bereitstellen von Fertigungsdaten zur Steuerung der Bewegung wenigstens eines virtuellen Werkzeuges des Modells der Werkzeugmaschine zur Fertigung des virtuellen Werkstücks und Erzeugen der Oberflächendaten des virtuellen Werkstücks anhand der Fertigungsdaten und des Modells der Werkzeugmaschine.

Ferner betrifft die Erfindung eine Vorrichtung zur Durchführung des Verfahrens.

Bekannte Fertigungsprozesse zur Herstellung von Werkstücken mit Werkzeugmaschinen laufen typischerweise nach folgendem Prinzip ab: In einer Arbeitsvorbereitung werden zunächst Fertigungsdaten bezüglich des herzustellenden Werkstücks erzeugt. Die Arbeitsvorbereitung umfasst in der Regel rechnergestützte Systeme, wie CAD (Computer Aided Design) und CAM (Computer Aided Manufacturing). Die Konstruktionsdaten eines CAD-Systems werden von dem CAM-System aufgegriffen und in Fertigungsdaten umgesetzt. Beispielsweise werden durch das CAM-System Frässtrategien festgelegt, um aus einem vorgegebenen Rohmaterial das gewünschte Werkstück zu fertigen. Dabei wird konkret die Bewegung und Orientierung des Werkzeugs für die Bearbeitung festgelegt.

Die Fertigungsdaten sind zum Zeitpunkt der Ausgabe durch das CAM-System unabhängig von einer konkreten Werkzeugmaschine. In der Regel wird in der Arbeitsvorbereitung im Anschluss an die Datenverarbeitung im CAM-System ein sogenannter Postprozessorlauf durchgeführt, der das neutrale Format auf eine bestimmte, proprietäre Steuerungssyntax umsetzt und der die maschinenspezifischen Details anpasst. Danach ist das NC-Programm für eine konkrete Maschine vorbereitet und wird in die Fertigung übergeben. Entsprechend diesem konkreten NC-Programm findet der Fertigungsprozess statt und es entsteht eine maschinen- und werkzeugspezifische Oberfläche des Werkstücks. Die Oberflächenqualität hängt beispielsweise von spezifischen NC-Kommandos im Teileprogramm, von Einstellungen der Steuerung (NC), von Einstellungen der geregelten Antriebssysteme und den charakteristischen statischen und dynamischen mechatronischen Eigenschaften der Antriebsstränge der Werkzeugmaschine ab.

In der Arbeitsvorbereitung oder der Produktion ist es üblich, Werkstücke zunächst auf einer Werkzeugmaschine einzufahren. Die Qualität wird an so erzeugten Werkstück-Mustern betrachtet und es werden bei Bedarf Optimierungen durchgeführt. Dabei kann es vorkommen, dass zur Optimierung Mechatronik-Experten vom Maschinenhersteller oder vom Steuerungshersteller hinzugezogen werden müssen um die Qualitätsanforderungen zu erreichen.

Zur Prozessoptimierung kann es aber auch notwendig sein, das Teileprogramm, d.h. geometrische Daten, oder aber beispielsweise die Frässtrategie zu ändern. Weiterhin kann es erforderlich sein, dass die gesamte Fertigungstechnologie geändert wird, um die gewünschte Qualität oder Fertigungszeit zu erreichen. Ferner kann es sinnvoll sein, die NC-Einstellungen und/oder die Antriebe zu ändern oder nach Möglichkeit auf eine andere Maschine eines Maschinenparks auszuweichen.

Wenn nach dem Einfahren Serienteile gefertigt werden, wird die Werkstückqualität durch Qualitätskontrollen im laufenden Betrieb (z.B. auf Messstationen) überprüft.

Sowohl in der Arbeitsvorbereitung als auch bei der Produktion möchte man so früh wie möglich im jeweiligen Prozess Aussagen über die Qualität der Werkstücke erhalten, um entsprechend darauf reagieren zu können. Da heute weder die mechatronischen Eigenschaften noch die teilweise komplexen Zusammenhänge dieser Eigenschaften auf das Werkstück bekannt sind, ist es bislang nicht möglich, die jeweiligen Prozesse diesbezüglich zu optimieren.

Aus der Druckschrift DE10248990A1 ist ein Verfahren zur Rekonstruktion der Oberfläche eines Werkstücks bekannt, welches beispielsweise bei der Simulation der Bearbeitung eines Werkstücks mittels eines Fräsers Verwendung findet.

Aus der Druckschrift DE10047928A1 ist die Simulation der Bearbeitung eines Werkstücks durch Erzeugen eines virtuellen Werkstücks auf einer virtuellen Werkzeugmaschine bekannt. Hierzu wird anhand eines Modells der Werkzeugmaschine auf einem Simulationsrechner das auch für die Anwendung auf einer realen Werkzeugmaschine bestimmte Teileprogramm ausgeführt und das Ergebnis auf einer Anzeigeeinrichtung dargestellt.

Aus der Druckschrift EP2690513A1 ist die Durchführung eines Condition-Monitoring bei einer Maschine bekannt, bei dem ein dynamisches Modell der Maschine bereitgestellt wird und anschließend eine Frequenzanalyse für die Maschine durchgeführt wird zur Bestimmung der Werte von Modell-Parametern.

Aufgabe der vorliegenden Erfindung ist es, die Simulation der Bearbeitung eines Werkstücks auf einer Werkzeugmaschine zu verbessern, um frühzeitig qualitativ hochwertige Aussagen bezüglich der zu erwartenden Oberflächenqualität des Werkstücks treffen zu können.

Diese Aufgabe wird durch ein Verfahren mit den in Patentanspruch 1 angegebenen Verfahrensschritten gelöst. Ferner wird die Aufgabe durch eine Vorrichtung zur Durchführung des Verfahrens mit den in Patentanspruch 12 angegebenen Merkmalen gelöst.

Bei einem erfindungsgemäßen Verfahren zum Bestimmen von Oberflächendaten eines virtuellen Werkstücks wird zunächst ein Modell einer realen Werkzeugmaschine erzeugt, die zur Fertigung eines zu dem virtuellen Werkstück korrespondierenden realen Werkstücks geeignet ist. Um zuverlässige Vorhersagen bezüglich der Oberflächenqualität der mit der realen Werkzeugmaschine erzeugten Werkstücke treffen zu können, ist es erforderlich, dass das erzeugte Modell der Maschine nicht nur prinzipiell den Maschinentyp der realen Werkzeugmaschine widerspiegelt, sondern dass die Parameter des Modells, wie beispielsweise Massen, Federsteifigkeiten oder Dämpfungswerte, in hohem Maße die Eigenschaften der realen Maschine aufzeigen. Ferner ist es erforderlich, dass das Modell die Maschine möglichst umfassend beschreibt, d.h. mit allen Antriebssträngen und vorzugsweise auch die Funktionen und Eigenschaften der numerischen Steuerung der Maschine mit einschließt.

In einem weiteren Verfahrensschritt werden Fertigungsdaten zur Steuerung der Bewegung wenigstens eines virtuellen Werkzeuges des Modells der Werkzeugmaschine zur Fertigung des virtuellen Werkstücks bereitgestellt. Vorteilhaft werden hierfür die gleichen Fertigungsdaten verwendet, die auch für die spätere Erzeugung des realen Werkstücks in der realen Werkzeugmaschine vorgesehen sind. Selbstverständlich schließt die an dieser Stelle verwendete übliche Ausdrucksweise "Steuerung der Bewegung" auch Regelungsvorgänge mit ein. Weiterhin beschreiben die Fertigungsdaten nicht allein die Bewegung wenigstens eines Werkzeuges, sondern auch die Aufspannung des Werkstücks in der Werkzeugmaschine. Anhand des Modells der Werkzeugmaschine und der Fertigungsdaten kann anschließend die Bearbeitung des Werkstücks in der Werkzeugmaschine simuliert werden. Bei der Recheneinrichtung für die Simulation kann es sich um einen üblichen Rechner, z.B. einen PC, aber auch um die Steuerung für die reale Werkzeugmaschine selbst handeln. Durch die Simulation der Bearbeitung werden letztendlich die Oberflächendaten des virtuellen Werkstücks anhand der Fertigungsdaten und des Modells der Werkzeugmaschine erzeugt. Belastbare Aussagen bezüglich der zu erwartenden Oberflächenqualität von Werkstücken können in der Regel nur dann gemacht werden, wenn klar ist, auf welcher realen Maschine das Werkstück hergestellt werden soll, und wenn ferner die mechatronischen Eigenschaften dieser realen Werkzeugmaschine bekannt und bei der Simulation berücksichtigt worden sind. Daher sieht die Erfindung vor, dass Modellparameter des Modells der Werkzeugmaschine anhand von messtechnisch ermittelten mechatronischen Eigenschaften der realen Werkzeugmaschine bestimmt werden. Diese mechatronischen Eigenschaften umfassen physikalische Größen, wie Massen, Federsteifigkeiten, Dämpfungswerte, etc., der Komponenten der realen Werkzeugmaschine. Auch das dynamische Verhalten der Maschine wird durch diese messtechnisch ermittelten mechatronischen Eigenschaften abgebildet, z.B. das Schwingungsverhalten bzw. die Resonanzfrequenzen. Dabei ist zu berücksichtigen, dass sich die mechatronischen Eigenschaften einer bestimmten Werkzeugmaschine im Lauf der Lebensdauer der Werkzeugmaschine auch verändern können. Daher ist es erforderlich, die Daten bezüglich der mechatronischen Eigenschaften der Werkzeugmaschine regelmäßig zu überprüfen bzw. zu aktualisieren.

Die Erfindung bietet den Vorteil, dass zum Bestimmen von Oberflächendaten eines virtuellen Werkstücks nicht nur auf ein Modell der Werkzeugmaschine zurückgegriffen wird, welches die prinzipielle Kinematik der Werkzeugmaschine widerspiegelt, sondern dass von dem Modell einer konkreten Werkzeugmaschine ausgegangen wird, deren konkrete mechatronische Eigenschaften in dem Modell mit einbezogen sind. Dazu werden die bei der konkreten Werkzeugmaschine vorhandenen "Störgrößen", z.B. eine bestimmte Resonanzfrequenz, bei der Simulation der Werkstückherstellung berücksichtigt. Nur so können qualitativ hochwertige Aussagen über die zu erwartende Oberflächenqualität der mit der realen Maschine hergestellten Werkstücke gewonnen werden.

Vorteilhaft werden die mechatronischen Eigenschaften der realen Werkzeugmaschine fachspezifisch messtechnisch bestimmt. D.h. dass die mechatronischen Eigenschaften der realen Werkzeugmaschine Achse für Achse durch entsprechende Messungen bestimmt werden. Dadurch werden zwar Wechselwirkungen zwischen den einzelnen Achsen weniger gut erfasst, jedoch erleichtert dies die Zuordnung der gemessenen Werte zu einzelnen Modellparametern und reduziert auch den Rechenaufwand bei der Simulation erheblich, indem auch diesbezüglich die mechatronischen Eigenschaften achsspezifisch gerechnet werden.

Um zuverlässige Vorhersagen über die Qualität der mit einer bestimmten Werkzeugmaschine gefertigten Werkstücke machen zu können, ist es weiterhin erforderlich, dass die Aufspannsituation bei der Simulation exakt mit der Aufspannsituation der realen Maschine bei der realen Bearbeitung übereinstimmt. Nur so können die achsspezifischen Eigenschaften der realen Werkzeugmaschine korrekt bei der Simulation berücksichtigt werden.

Bei einer vorteilhaften Weiterbildung der Erfindung ist vorgesehen, dass die Fertigungsdaten Daten bezüglich mehrerer unterschiedlicher Fertigungstechnologien umfassen und die Oberflächendaten unter Berücksichtigung der jeweiligen Fertigungstechnologie erzeugt werden. Beispielsweise kann das Schwingungsverhalten eines bestimmten Antriebsstranges beim Fräsen völlig andere Auswirkungen als beim Bohren haben. Werden diesbezügliche Daten bei der Simulation berücksichtigt, so kann auch dadurch die Qualität der Simulation gesteigert werden.

Die gemäß der Erfindung durch Simulation erzeugten Oberflächendaten können direkt zu den entsprechenden Daten eines realen Werkstücks korrespondieren. Bei den Oberflächendaten handelt es sich dabei um Punkte im dreidimensionalen Raum. Sie können daher in einfacher Weise in Visualisierungsdaten zur Visualisierung wenigstens einer Oberfläche des betreffenden virtuellen Werkstücks auf einer Anzeigeeinrichtung, insbesondere zur 3D-Darstellung auf einem Display, umgewandelt werden. Die Oberflächendaten können jedoch auch - unabhängig von einer beabsichtigten Visualisierung - lediglich Kennzahlen für die Oberflächenbeschaffenheit des Werkstücks sein. Insbesondere können sich dahinter Kennzahlen für Formabweichungen, beispielsweise in Form von Welligkeit, Rauheit, Riefen, Rillen, Graten, etc., verbergen. Weiterhin können diesbezügliche Oberflächendaten auch eine Bewertung der Oberflächenqualität umfassen, z.B. einen Hinweis auf leichte Rillenbildung in einem bestimmten Bereich. Der Anwender kann sich auch dadurch schnell ein Bild von der zu erwartenden Oberflächenqualität machen.

Besonders vorteilhaft erfolgt eine Auswertung der erzeugten Oberflächendaten dahingehend, dass der Anwender möglichst anschaulich auf Problemstellen der Oberfläche des virtuellen Werkstücks aufmerksam gemacht wird. Beispielsweise können Problemzonen bei der Visualisierung der Werkstückoberfläche besonders hervorgehoben werden, z.B. durch eine besondere Farbgebung oder durch Einrahmung eines betreffenden Bereiches. Besonders hilfreich für den Anwender ist eine automatische Bewertung der Problemstellen durch die Recheneinrichtung, beispielsweise in Form von Angaben bezüglich der Größe der Problemzone, der Anzahl an Rillen auf einer bestimmten Fläche oder bezüglich der Tiefe der Rillen. Der Anwender kann dadurch die aufgezeigten Problemstellen besser einordnen und bewerten. Zur besonderen Hervorhebung betreffender Problemstellen können den Visualisierungsdaten zur Visualisierung der Werkstückoberfläche auch sogenannte "Augmented-Reality-Daten", wie beispielsweise in der Realität nicht vorhandene Umrandungen von Problemstellen, überlagert werden.

Bei einer besonders bevorzugten Ausführungsform der Erfindung werden die Oberflächendaten nicht nur angezeigt, sondern die Recheneinrichtung generiert automatisch Optimierungsvorschläge, insbesondere bezüglich der Fertigungsdaten, mittels derer eine Reduzierung oder sogar eine Beseitigung der jeweiligen Problemstelle ermöglicht wird. Beispielsweise können Rillen in der Oberfläche eines Werkstücks dadurch hervorgerufen werden, dass bei der Herstellung des Werkstücks eine Achse im Bereich einer Resonanzfrequenz betrieben wird. Eine mögliche Lösung zur Beseitigung dieses Problems kann darin bestehen, dass die Bearbeitung des Werkstücks so verändert wird, dass diese Achse außerhalb ihres Resonanzbereiches betrieben wird. Beispielsweise können hierfür die Vorgaben bezüglich der Maxima von Geschwindigkeit, Beschleunigung oder Ruck für diese Achse herabgesetzt werden oder die Beschleunigung bei Achsumkehr kann herabgesetzt werden, um die Auswirkung der Umkehrreibung zu verringern. Weitere Möglichkeiten zur automatischen Erzeugung verbesserten Fertigungsdaten sind beispielsweise eine verbesserte/optimierte Aufspannung, das heißt Ausrichtung des Werkstücks in der Maschine, oder automatisch erzeugte oder zumindest vorgeschlagene Änderungen am Teileprogramm selbst, durch die z.B. geometrische Vorverzerrungen an das Maschinenverhalten angepasst werden. Eine weitere beispielhafte Möglichkeit zur Reduzierung bzw. Beseitigung von Oberflächenfehlern sieht vor, nach Möglichkeit die Achsumkehr für einen Arbeitsprozess in einen Bereich zu verlagern, in dem das Werkzeug nicht mit dem Werkstück in Eingriff steht.

Die Erfindung wird nachfolgend anhand von Ausführungsbeispielen näher erläutert. Es zeigen:
FIG 1 ein Feder-Masse-Dämpfer-Modell eines Antriebsstranges einer Werkzeugmaschine,
FIG 2 einen bewerteten Arbeitsplan und
FIG 3 ein Ablaufdiagramm zur Durchführung eines erfindungsgemäßen Verfahrens.

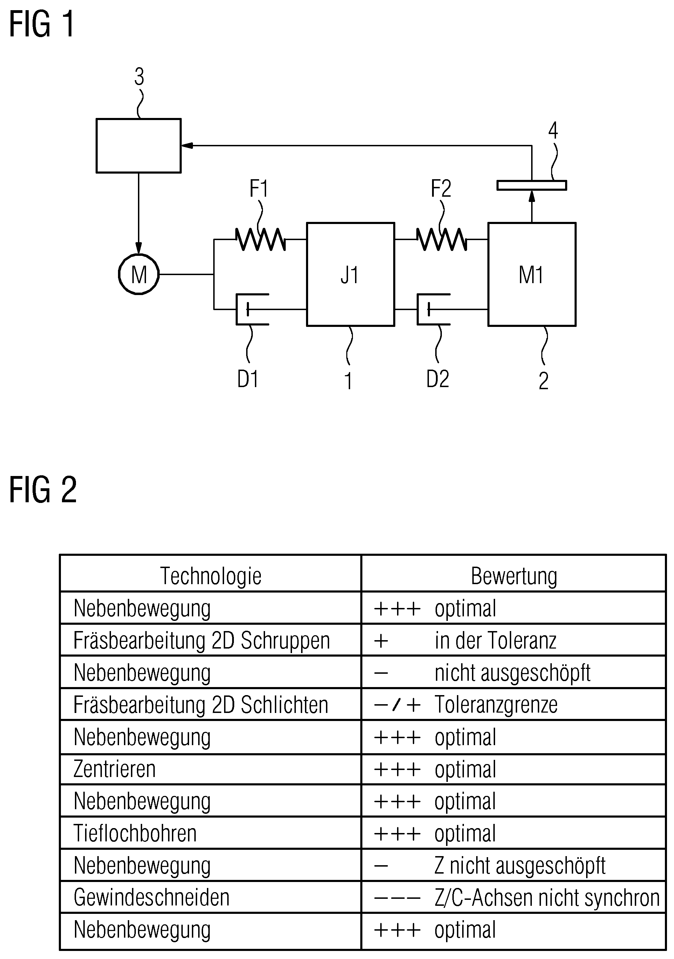

FIG 1 zeigt in einem vereinfachten Blockschaltbild ein Feder-Masse-Dämpfer-Modell eines beispielhaften Antriebsstranges einer Werkzeugmaschine. Wesentliche Komponenten des betreffenden Antriebsstranges sind ein Motor M, ein Kugelgewindetrieb 1 sowie ein Maschinentisch 2. Zur Simulation des Elastizitätsverhaltens des Antriebsstranges erfasst das Modell ferner die Steifigkeit F1 und die Dämpfung D1 zwischen dem Motor M und dem Kugelgewindetrieb 1 sowie die Steifigkeit F2 und die Dämpfung D2 zwischen dem Kugelgewindetrieb 1 und dem Maschinentisch 2. Ferner umfasst das Modell auch eine Regelungseinrichtung 3, die den Motor M über Stromrichter (nicht dargestellt) ansteuert und die Bewegung des Maschinentisches 2 vorgibt. Zur exakten Positionierung des Maschinentisches 2 ist ein Längenmesssystem 4 vorhanden, das die exakte Ist-Position des Maschinentisches 2 erfasst und der Regelungseinrichtung 3 zuführt.

Um später genaue Aussagen über die Oberflächenqualität eines mit einer Werkzeugmaschine hergestellten Werkstücks machen zu können, ist eine möglichst exakte Übereinstimmung der Eigenschaften eines realen Antriebsstranges mit dem Modell erforderlich. Daher ist im Rahmen der Erfindung vorgesehen, dass die Modellparameter an einem zu dem Modell des Arbeitsstranges korrespondierenden Antriebsstrang genau der realen Werkzeugmaschine ermittelt bzw. verifiziert werden, mit der später ein reales Werkstück produziert und dessen Oberflächenqualität zunächst mittels der Simulation vorbestimmt werden soll.

Durch geeignete Messungen werden daher die statischen und dynamischen Eigenschaften des Antriebsstranges der realen Werkzeugmaschine gemessen und die betreffenden Werte für die Steifigkeiten F1 und F2, die Dämpfungen D1 und D2 sowie das Trägheitsmoment J1 des Kugelgewindetriebes 1 und die Masse M1 des Maschinentisches 2 dem Modell zugeordnet. Durch die Regelungseinrichtung 3 ist vorteilhaft auch das Regelverhalten einer damit korrespondierenden realen Regeleinrichtung, insbesondere einer CNC-Steuerung, mit in das Modell und damit die Simulation einbezogen.

Analog zu dem Ausführungsbeispiel werden weitere, vorzugsweise alle Antriebsstränge der realen Werkzeugmaschine in einem entsprechenden Maschinenmodell erfasst. Dabei können auch weitere, bislang nicht aufgezeigte Maschineneigenschaften, z.B. die Reibung, mit erfasst werden.

Um qualitative und quantitative Aussagen in Bezug auf das Werkstück generieren zu können, wird der kinematische Zusammenhang der Maschinen-Achsen zum Werkstückkoordinatensystem benötigt. Dieser ist - sofern die Aufspannung des Werkstücks in der Werkzeugmaschine festgelegt ist - über die Daten und Parameter bekannt, die die numerische Steuerung nutzt, um von dem Maschinenkoordinatensystem auf das Werkstückkoordinatensystem zu rechnen. Diese Daten liegen in der Steuerung vor und können von der Steuerung bzw. der Simulations-Recheneinrichtung verwendet werden, um den (je nach Maschinentyp komplexen) geometrischen Zusammenhang zwischen Eigenschaft des Antriebsstrangs und der Werkstückbearbeitung herzustellen. Damit ergibt sich zusätzlich die Möglichkeit, Abweichungen aus achsunabhängigen oder achsübergreifenden Störungen auf die Werkstückqualität zu ermitteln. Beispiele hierzu sind: eine durch eine beschleunigte Bewegung einer Achse angeregte Schwingung koppelt auf eine andere Achse über; durch achsunabhängige Schwingungsquellen angeregte Dauerstörungen (z.B. durch Pumpen, Lüfter, Kühler etc) koppeln auf Maschinenachsen über; eine Unwucht in einer Frässpindel oder Schwingung des Werkzeuges beeinflussen weitere Maschinenachsen; Bremsvorgänge einer Achse (beabsichtigt oder unbeabsichtigt) beeinflussen weitere Achsen, etc. etc.

Je nach Bearbeitungstechnologie, die im Entstehungsprozess des Werkstücks zur Anwendung kommt, haben die mechatronischen Eigenschaften der Maschine unterschiedliche Auswirkungen auf die Werkstückqualität. Beispielsweise hat das Schwingungsverhalten des Antriebsstrangs bei Richtungsänderungen beim Fräsen Auswirkungen auf die Güte der Oberfläche. Filtereinstellungen der Steuerung führen zu Konturabweichungen, die sich bei Freiformteilen als Marken oder sogenannte "Fischlies" in der Oberfläche zeigen. Je nach Technologie des Bearbeitungsprozesses wirkt sich eine mechatronische Eigenschaft mehr oder weniger negativ aus. Um dem Betreiber der Maschine qualifizierte Aussagen liefern zu können, wird der Bearbeitungsprozess vorteilhaft in seine technologischen Bearbeitungsschritte zerlegt. Dies erfolgt vorzugsweise weitgehend automatisiert auf Basis des Teileprogramms und der Werkzeugdaten. Der Bearbeitungsprozess wird damit in einen "Arbeitsplan" aus technologischer Sicht gegliedert. Die Auswirkungen der jeweiligen mechatronischen Eigenschaft der Maschine werden spezifisch für jeden einzelnen Bearbeitungsschritt bei der Simulation bewertet.

FIG 2 zeigt ein Beispiel für einen derartigen bewerteten Arbeitsplan. Es erfolgt eine Gegenüberstellung der jeweiligen Technologie sowie ihrer Auswirkungen auf das Werkstück. Durch die - vorteilhaft automatisch durch die Recheneinrichtung - durchgeführte Bewertung der einzelnen Technologien kann sich der Anwender schnell einen Überblick darüber verschaffen, durch welchen technologischen Schritt bei der Werkstückherstellung evtl. vorhandene Qualitätsmängel hervorgerufen wurden.

Bei einer besonders bevorzugten Ausführungsform der Erfindung werden dem Benutzer ermittelte Qualitätsmängel nicht nur in qualitativer und/oder quantitativer Hinsicht aufgezeigt, sondern die Recheneinrichtung bewirkt auch automatisch eine Optimierung dahingehend, dass aufgezeigte Qualitätsmängel reduziert oder beseitigt werden. Vorzugsweise erfolgt die Optimierung unter Berücksichtigung des oben aufgezeigten, bewerteten Arbeitsplanes. Letzteres hat den Vorteil, dass nur gezielt an den Stellen des Herstellungsprozesses eingegriffen wird, die Probleme verursacht haben. Die erforderlichen Änderungen können so auf ein Minimum beschränkt werden. Vorteilhaft erfolgt im Anschluss an geänderte Fertigungsdaten erneut eine Simulation unter Berücksichtigung der Änderungen, so dass die beabsichtigten Verbesserungen am Werkstück auch verifiziert werden.

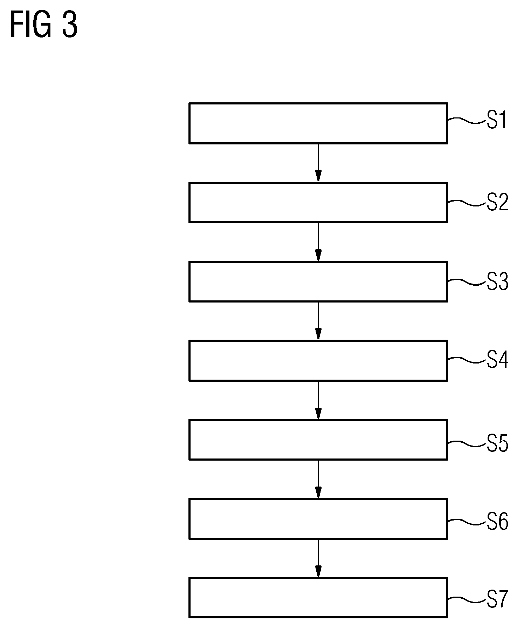

FIG 3 veranschaulicht die wesentlichen Verfahrensschritte beim Ablauf eines erfindungsgemäßen Verfahrens:

In einem ersten Verfahrensschritt S1 wird ein Modell einer realen Werkzeugmaschine erzeugt, mit der später ein Werkstück mit hoher Oberflächenqualität hergestellt werden soll. Das Modell kann auch als "virtuelle Werkzeugmaschine" bezeichnet werden.

Damit das Verhalten der virtuellen Werkzeugmaschine bei der Herstellung eines Werkstücks exakt das Verhalten der korrespondierenden realen Werkzeugmaschine widerspiegelt, werden in einem zweiten Verfahrensschritt S2 Eigenschaften der realen Werkzeugmaschine messtechnisch erfasst und das Modell entsprechend parametriert.

In einem dritten Verfahrensschritt werden anschließend Fertigungsdaten bereitgestellt, die sowohl bei der realen Maschine als auch in der Simulation die Bewegung von Werkzeugen relativ zu dem Werkstück steuern. Die Fertigungsdaten umfassen neben dem Teileprogramm auch weitere Daten, beispielsweise bezüglich der konkreten Aufspannsituation.

Anhand des Modells der Maschine und der Fertigungsdaten wird in einem Verfahrensschritt S4 mittels einer Recheneinrichtung in Verbindung mit einer geeigneten Software die Herstellung des Werkstücks simuliert und ein "virtuelles Werkstück" erzeugt.

In einem anschließenden Verfahrensschritt S5 wird das erzeugte virtuelle Werkstück dem Benutzer auf einem Display - vorzugsweise in 3D-Darstellung angezeigt, wobei vorteilhaft eine beliebige Einstellung der Blickrichtung möglich ist.

Die Erfindung sieht vor, dass über die bloße Simulation der Erzeugung eines 3D-Modells des Werkstücks (virtuelles Werkstück) hinaus eine Bewertung der Oberflächenqualität des Werkstücks erfolgt. Hierzu werden in einem Verfahrensschritt S6 anhand der mechatronischen Eigenschaften der Werkzeugmaschine, die sich in den Modell-Parametern widerspiegeln, in Verbindung mit den Fertigungsdaten die Oberflächendaten des Werkstücks derart hochgenau bestimmt, dass "Problemstellen" (Wellen, Rauheiten, Rillen, Riefen, Grate etc.) erkennbar werden. Diese Problemstellen können einerseits visualisiert und insbesondere durch Anwendung von Mitteln aus dem Bereich "Augmented Reality" auch hervorgehoben werden. Andererseits erfolgt zusätzlich oder alternativ eine automatische Bewertung der Problemstellen hinsichtlich Qualität und/oder Quantität des jeweiligen Problems.

Schließlich erfolgt in einem Verfahrensschritt S7 eine Optimierung des Werkstücks dahingehend, dass die Recheneinrichtung automatisch die Ursachen für das Auftreten der jeweiligen Problemstelle bestimmt und analysiert und sogleich Abhilfemaßnahmen zur Verringerung bzw. Beseitigung des jeweiligen Problems vorsieht. Diese Abhilfemaßnahmen können vorteilhaft zunächst lediglich als Vorschläge vorgesehen werden, deren Umsetzung eine Bestätigung durch den Anwender erfordert. Selbstverständlich hat auch der Anwender die Möglichkeit, über eine manuelle Anpassung der Fertigungsdaten in den Herstellungsprozess einzugreifen.

Vorteilhaft wird der Herstellungsprozess zunächst mittels der optimierten Fertigungsdaten erneut in der Simulation durchlaufen, bevor ein optimiertes reales Produkt erzeugt wird.

## Patentansprüche

1. Verfahren zum Bestimmen von Oberflächendaten eines virtuellen Werkstücks durch
- Erzeugen eines Modells einer realen Werkzeugmaschine, die zur Fertigung eines zu dem virtuellen Werkstück korrespondierenden realen Werkstücks geeignet ist,
- Bereitstellen von Fertigungsdaten zur Steuerung der Bewegung wenigstens eines virtuellen Werkzeuges des Modells der Werkzeugmaschine zur Fertigung des virtuellen Werkstücks, **dadurch gekennzeichnet, dass**
- Modellparameter des Modells der Werkzeugmaschine anhand von messtechnisch ermittelten mechatronischen Eigenschaften der realen Werkzeugmaschine bestimmt und
- Oberflächendaten des virtuellen Werkstücks anhand der Fertigungsdaten und des Modells der Werkzeugmaschine ermittelt werden.

2. Verfahren nach Anspruch 1, wobei die mechatronischen Eigenschaften der realen Werkzeugmaschine wenigstens teilweise achsspezifisch messtechnisch bestimmt werden.

3. Verfahren nach einem der Ansprüche 1 oder 2, wobei die Modellparameter des Modells der Werkzeugmaschine während der Laufzeit der realen Werkzeugmaschine aktualisiert werden, so dass Änderungen der mechatronischen Eigenschaften der realen Werkzeugmaschine erkannt und bei der Bestimmung der Oberflächendaten berücksichtigt werden.

4. Verfahren nach einem der Ansprüche 1 bis 3, wobei in einer realen CNC-Steuerung und/oder einer virtuellen CNC-Steuerung zur Steuerung des Modells der Werkzeugmaschine und/oder der realen Werkzeugmaschine eine Aufspannsituation des virtuellen Werkstücks bestimmt wird und unter Berücksichtigung der Aufspannsituation messtechnisch ermittelte mechatronische Eigenschaften wenigstens eines Antriebsstranges der realen Werkzeugmaschine bei der Bestimmung von Oberflächendaten des virtuellen Werkstücks berücksichtigt werden.

5. Verfahren nach einem der Ansprüche 1 bis 4, wobei die Fertigungsdaten Daten bezüglich mehrerer unterschiedlicher Fertigungstechnologien umfassen und die Oberflächendaten unter Berücksichtigung der jeweiligen Fertigungstechnologie erzeugt werden.

6. Verfahren nach einem der Ansprüche 1 bis 5, wobei aus den Oberflächendaten Visualisierungsdaten zur Visualisierung einer Oberfläche des virtuellen Werkstücks auf einer Anzeigeeinrichtung generiert werden.

7. Verfahren nach Anspruch 6, wobei anhand der Oberflächendaten und/oder der Visualisierungsdaten Problemstellen der Oberfläche des virtuellen Werkstücks erkannt werden.

8. Verfahren nach Anspruch 7, wobei die Visualisierungsdaten Augmented-Reality-Daten zum Hervorheben der Problemstellen umfassen.

9. Verfahren nach Anspruch 8, wobei die Problemstellen, insbesondere qualitativ und/oder quantitativ, bewertet werden.

10. Verfahren nach einem der Ansprüche 1 bis 9, wobei mittels der Oberflächendaten optimierte Fertigungsdaten bestimmt werden.

11. Verfahren nach Anspruch 9 und 10, wobei mittels der optimierten Fertigungsdaten die Problemstellen reduziert oder beseitigt werden.

12. Vorrichtung zum Bestimmen von Oberflächendaten eines virtuellen Werkstücks, umfassend
- eine Recheneinrichtung zum Verarbeiten von Fertigungsdaten zur Steuerung der Bewegung wenigstens eines virtuellen Werkzeuges eines Modells einer Werkzeugmaschine zur Fertigung eines virtuellen Werkstücks und zum Erzeugen von Oberflächendaten des virtuellen Werkstücks,
- eine Modellparameterbestimmungseinrichtung zum Bestimmen von Modellparametern des Modells der Werkzeugmaschine anhand von messtechnisch ermittelten mechatronischen Eigenschaften einer zu dem Modell der Werkzeugmaschine korrespondierenden realen Werkzeugmaschine.

13. Vorrichtung nach Anspruch 12, wobei die mechatronischen Eigenschaften der realen Werkzeugmaschine wenigstens teilweise achsspezifisch messtechnisch bestimmbar sind.

14. Vorrichtung nach einem der Ansprüche 12 oder 13, wobei die Modellparameter des Modells der Werkzeugmaschine während der Laufzeit der realen Werkzeugmaschine aktualisierbar sind und Änderungen der mechatronischen Eigenschaften der realen Werkzeugmaschine erkennbar und bei der Bestimmung der Oberflächendaten berücksichtigbar sind.

15. Vorrichtung nach einem der Ansprüche 12 bis 14, wobei in einer realen CNC-Steuerung und/oder einer virtuellen CNC-Steuerung zur Steuerung des Modells der Werkzeugmaschine und/oder der realen Werkzeugmaschine eine Aufspannsituation des virtuellen Werkstücks bestimmbar ist und unter Berücksichtigung der Aufspannsituation messtechnisch ermittelte mechatronische Eigenschaften wenigstens eines Antriebsstranges der realen Werkzeugmaschine bei der Bestimmung von Oberflächendaten des virtuellen Werkstücks berücksichtigbar sind.

16. Vorrichtung nach einem der Ansprüche 12 bis 15, wobei die Fertigungsdaten Daten bezüglich mehrerer unterschiedlicher Fertigungstechnologien umfassen und die Oberflächendaten unter Berücksichtigung der jeweiligen Fertigungstechnologie erzeugbar sind.

17. Vorrichtung nach einem der Ansprüche 12 bis 16, wobei die Recheneinrichtung aus den Oberflächendaten Visualisierungsdaten zur Visualisierung einer Oberfläche des virtuellen Werkstücks auf einer Anzeigeeinrichtung generiert.

18. Vorrichtung nach Anspruch 17, wobei mittels der Recheneinrichtung anhand der Oberflächendaten und/oder der Visualisierungsdaten Problemstellen der Oberfläche des virtuellen Werkstücks erkennbar sind.

19. Vorrichtung nach Anspruch 17, wobei mittels der Anzeigeeinrichtung Augmented-Reality-Daten zum Hervorheben der Problemstellen anzeigbar sind.

20. Vorrichtung nach Anspruch 17, wobei die Problemstellen mittels der Recheneinrichtung bewertbar sind.

21. Vorrichtung nach einem der Ansprüche 12 bis 20, wobei mittels der Oberflächendaten optimierte Fertigungsdaten bestimmbar sind.

22. Vorrichtung nach Anspruch 20 und 21, wobei mittels der optimierten Fertigungsdaten die Problemstellen reduzierbar oder beseitigbar sind.
